Europäisches Patentamt

(19) European Patent Office

Office européen des brevets

(11) Publication number: **0 240 308 B1**

(12) # EUROPEAN PATENT SPECIFICATION

(45) Date of publication of patent specification :
**04.12.91 Bulletin 91/49**

(51) Int. Cl.⁵ : **F02F 3/00, F16J 1/00, F16J 9/22**

(21) Application number : **87302787.4**

(22) Date of filing : **31.03.87**

(54) **Piston for internal combustion engine and method for reinforcing the same.**

(30) Priority : **01.04.86 JP 76014/86**

(43) Date of publication of application :
**07.10.87 Bulletin 87/41**

(45) Publication of the grant of the patent :
**04.12.91 Bulletin 91/49**

(84) Designated Contracting States :
**DE FR GB IT**

(56) References cited :
**DE-A- 3 339 867**
**FR-A- 2 546 570**
**US-A- 4 233 490**

(73) Proprietor : **IZUMI AUTOMOTIVE INDUSTRY COMPANY LIMITED**
**620 Oaza Onakai**
**Kawagoe-shi Saitama-ken (JP)**

(72) Inventor : **Suzuki, Yoshihiro**
**4-26-1, 3-Chome Fujimi Fukiage-Cho**
**Kitaadachi-Gun Saitama-Ken (JP)**

(74) Representative : **Thomas, Roger Tamlyn et al**
**D. Young & Co. 10 Staple Inn**
**London WC1V 7RD (GB)**

## Description

A METHOD FOR PARTIALLY REINFORCING A
PISTON FOR AN INTERNAL COMBUSTION
ENGINE AND A PISTON FORMED BY SUCH
METHOD

This invention relates to a method for partially reinforcing a piston for an internal combustion engine and to a piston formed by such method.

An internal combustion engine normally includes a piston which reciprocates in a cylinder converting the combustion output power of the engine into mechanical work. Therefore, the piston comprises an important component of an engine, and the piston receives high mechanical and thermal loads. Consequently an annular upper groove for an upper ring and an edge of a combustion chamber formed on the upper face of the piston may be damaged by the above-mentioned loads. To prevent such damage, a conventional piston may be reinforced partially at the portions where it receives high loads.

United States Patent Specification 4, 233, 490 teaches a method of reinforcing an aluminium alloy piston ring groove by fusing the piston body where the piston ring groove is to be cut, with an alloying addition so that a linear-resistant weld is formed. Nickel or nickel-chromium alloy is used as the alloying addition so that solid fine-grained particles of nickel alumnide disperse in the piston alloy under melting which impart the desired durability to the weld. This method, however, is only applicable to the ring groove of a piston because if larger areas are covered by the alloying addition the resistance to thermal cladding diminishes.

In the first of three further known methods to reinforce a piston partially, a porous mass of reinforcement fibre material is formed into shapes corresponding to the shapes of the necessary portions. The porous mass of the reinforcement is arranged in a casting die, and a melt of mother metal is poured into the casting die. High pressure is applied to the melt to force the melt into the pores of the porous mass. Alternatively, in a second method, a reinforcement material is previously manufactured and the material is cast into the mother metal to connect with the piston as reinforcement. In a third method, an independent piece of reinforcement is prepared as a component which is then connected to a piston by means of electron beam welding.

In the first method using high pressure casting, the casting apparatus is expensive in comparison with apparatus using gravity casting, because the high pressure casting dies must be strong enough to bear the high pressure of the melt, and further apparatus is required for the pouring and solidification of the melt under pressure. Moreover, it is essential to reduce the mass of metal for the necesary lightening of the piston. Accordingly, in gravity casting, under-cut portions are freely formed. In high pressure casting, however, the pressed melt intrudes into gaps between the casting dies to prohibit the separated slide core from being taken off when casting dies are divided for forming the under-cut portions on the piston. For this reason, it is impossible to form under-cut portions on a piston manufactured by the high pressure casting method, and the weight of the piston is thus increased.

In the second method, wherein the reinforcements are cast into the mother metal, oxidation layers are formed on the surfaces between the complex materials, and such layers prohibit perfect union between the component and the mother metal of the piston especially in a piston made of aluminium alloy, the surface of which is easily oxidised. Furthermore, the mother metal of the piston takes away the heat from the poured melt thus preventing union when the melt is poured into the casting die to form the boundary portions. These technical difficulties prevent practical success.

In the third method, wherein the reinforcement component is connected to the piston by electron beam welding, the welding apparatus is very expensive. Furthermore, the welding is performed in a vacuum atmosphere, which takes a long time to produce. For this reason, the cycle time duration of the process is very long. These problems raise the cost of manufacturing the piston and makes the practice impossible.

According to one aspect of the invention there is provided a method for partially reinforcing a piston for an internal combustion engine, said method comprising;

manufacturing the piston; and

forming padding on one or more portions of the piston by welding with a filler metal which contains a reinforcement material, characterized in that, while the filler metal melts during the welding and becomes connected to the piston, the melting temperature of the reinforcement material is higher than the welding temperature such that the reinforcement material is substantially unchanged during welding and remains embedded in the filler metal.

According to another aspect of the invention there is provided a piston for an internal combustion engine formed by a method according to said one aspect of the invention in which one or more portions of the piston are reinforced in that the piston is provided with padding formed on said portion or portions by welding with the filler metal to reinforce said portion or portions, said filler metal containing the reinforcement material, characterized in that, while the filler metal melts during the welding and becomes connected to the piston, since the melting temperature of the reinforcement material is higher than the welding temperature the reinforcement material is substantially unchanged during the welding and remains embedded in the filler metal.

The invention is diagramatically illustrated by way of example in the accompanying drawings, in which:-

Figure 1 is a cross section of a piston for an internal combustion engine according to a first embodiment of the invention;

Figure 2 is a cross section of a piston of comparison;

Figure 3 and Figure 4 are graphs showing the result of wear tests;

Figure 5 is a cross section of a piston for an internal combustion engine according to the second embodiment of the invention;

Figure 6 is a graph showing the result of a thermal crack test; and

Figure 7 is a cross section of a piston according to a modification of the second embodiment.

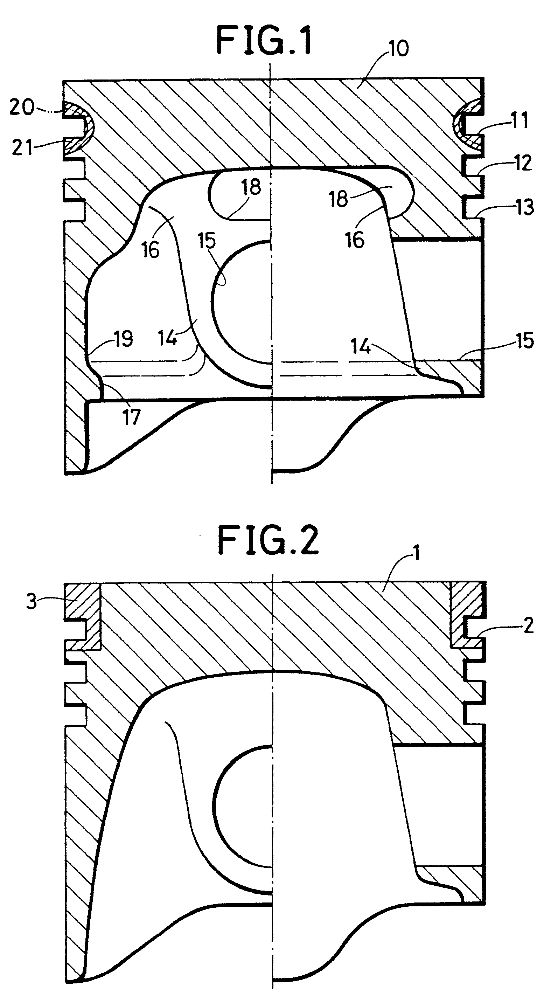

A first embodiment is shown in Figure 1. According to this embodiment, a piston 10 for an internal combustion engine is manufactured of aluminium alloy by means of ordinary casting or gravity casting. The piston 10 has a circular shape and three annular grooves 11, 12 and 13 are provided on the periphery for receiving piston rings. Further, the piston 10 has a recess which opens downwardly, and a pair of bosses 14 are formed in the recess. The boss 14 shown has a circular hole 15 for receiving one end of a piston pin. Divided dies are used in the gravity casting manufacture of the piston 10, and ribs 16 and 17 are formed above the boss 14 and on the bottom end of a skirt portion respectively. Further under-cut recess 18 and 19 are fomed between the neighbouring ribs 16 and on the upper side of the rib 17 respectively for lightening the piston 10.

A filler metal is manufactured for partially reinforcing the top annular groove 11 of the piston. The filler metal includes a reinforcing material made of an alumina fibre, the composition of which is 95% $Al_2O_3$ and 5% $SiO_2$, and the mean diameter of which is $3\mu m$. The alumina fibre is supplied to a vacuum filter to form a predetermined shaped mass, a density of which is $0.15g/cm^3$. The mass of the alumina fibre is arranged inside the casting die for melt forging, and a melt of aluminium alloy (JIS AC9B) at 760°C is poured into the casting die. The melt is solidified under the pressure of $1000kg/cm^2$ to manufacture a billet of reinforcement material of alumina fibre. The billet is inserted into an extruder provided with a heater and the billet is heated to about 580°C to melt the billet partially. That is, the billet is extruded under co-existence of solid and melt, to obtain a linear filler metal, a diameter of which is 3.2mm.

By contrast, the mother piston is manufactured by gravity casting with aluminium alloy (JIS AC8A), and a recess 20 is formed in a portion corresponding to the top annular groove 11, and the recess portion is pre-heated to 200°C. Thereafter filler material 21 is placed in the recess 20 with the filler metal by means of TIG welding to melt the filler material. The conditions of the TIG welding is as follows. Electric current of welding is 200 A, argon is used as protection gas, and speed of welding is 48cm/minute. The filler material 21 is then machined to form an annular groove 11 for receiving the top piston ring as shown in Figure 1.

A comparison is prepared for the evaluation of the piston 10. The comparison comprises a piston 1 which is reinforced partially in a conventional manner as shown in Figure 2. An annular shaped mass 3 is provided on a portion 1 where an annular groove 2 is to be formed to reinforce the groove 2. The mass 3 has the same composition and the same density as that of the mass of fibre used in the above mentioned filler material 21. The mass 3 is arranged in a casting die and is joined with the mother piston 1 by high pressure casting at the position where the groove 2 should be formed.

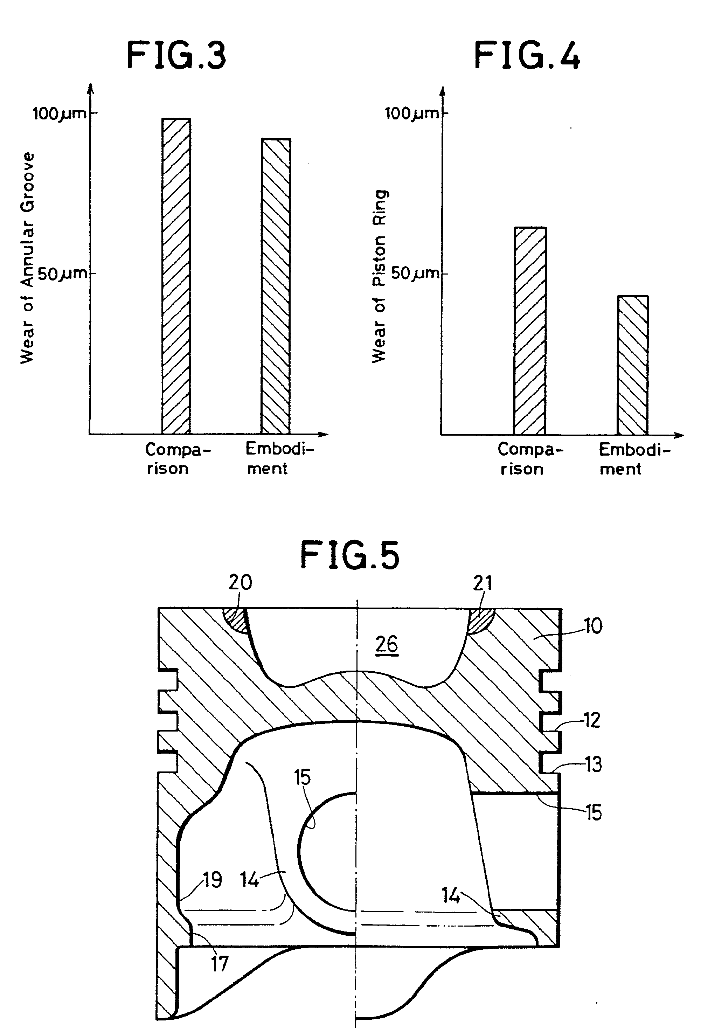

The piston 1 of the comparison and the piston 10 of the embodiment are used in a Diesel engine, output power of which is 72HP and the exhaust volume of which is 2.4 litre. The engine is provided for endurance test of 500 hours for measuring the wear of the upper and lower surfaces of the annular groove and the corresponding upper and lower surfaces of the piston ring. The results of these tests, are shown in Figure 3 and Figure 4. The results show that wear of the annular groove is improved by the piston 10 of this embodiment, and wear of a piston ring is reduced in comparison with the wear of the conventional one.

A second embodiment of this invention will now be described with reference to Figure 5. The piston of this embodiment is also made of aluminium alloy by means of gravity casting. The piston 10 has a recess or a combustion chamber 26 at the top surface thereon, and the edge of the chamber 26 is reinforced by material 21. The top surface of a known piston used in a direct injection type diesel engine has a combustion chamber 26, and the peripheral edge of the chamber 26 is partially heated and mechanical stress is applied on every combustion cycle. The stress causes cracks and the cracks limit the life of the piston. In this embodiment, the peripheral edge is reinforced by the material 21.

A gas atomized powder of pure aluminium (99.7%) is used for the material 21 of the reinforcing metal. The powder is mixed with a silicon carbide fibre which has diameters of $0.5-1\mu m$ and is mixed so that the volume ratio of the fibre is 20%. A billet is obtained by extruding the mixture under a pressure of $2 ton/cm^2$ and is then introduced into an extruding apparatus and is extruded under 650°C to form linear filler metal, a diameter of which is 3.2mm. The reinforced material 21 is provided on the peripheral edge of the combustion chamber 26 by welding the linear filler metal.

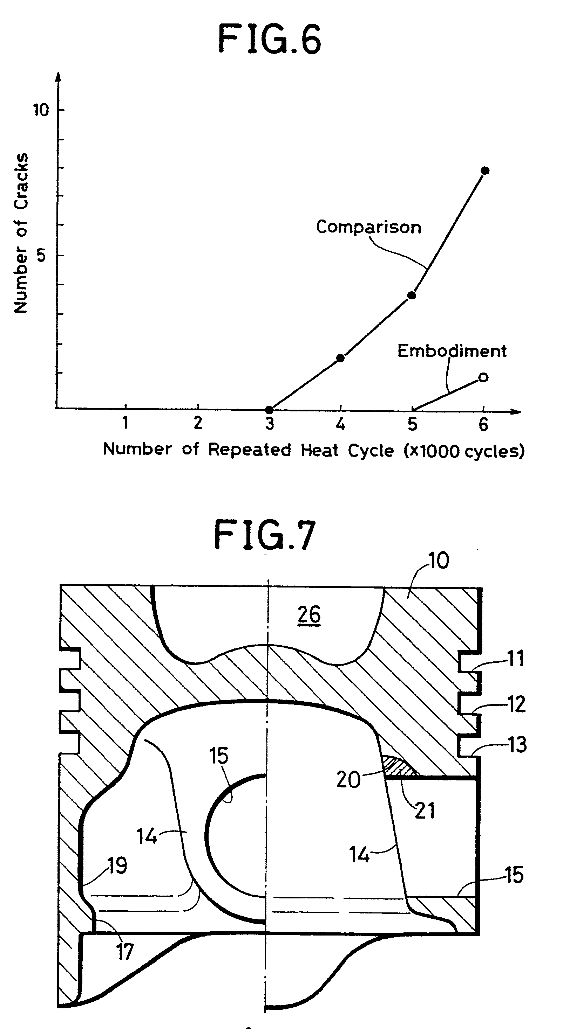

A thermal shock test is performed by examination apparatus with a high frequency furnace for testing the piston 10 with the padding 21 on the edge of the chamber 26. Heat cracking of the padding 21 is also tested and compared with the conventional piston. In this test, the piston 10 is compared with another piston. A piston of the comparison is reinforced by a mass of silicon carbide whisker at the peripheral edge of the combustion chamber. The mass of the reinforcement whisker has a volume ratio of 20% and is complexed with high pressure casting. The result of the test is shown in Figure 6, and the result shows that the piston of this embodiment brings improved results compared with the conventional piston manufactured by conventional high pressure casting.

A small piece is cut out from the complexed portion of the piston 10, and mother metal is removed by solving to separate the silicon carbide whisker. The whisker is examined with an electronic microscope. According to the examination, the surface of the silicon carbide of this embodiment is smooth. On the contrary, reacted substances exist on a surface of the whisker which is cut-out from the conventional piston manufactured by high pressure casting. It is assumed that the reacted substance causes the thermal cracks and this embodiment does not yield the reacted substance that will bring good results.

As mentioned above, according to this invention, filler metal with reinforcement materials is used to form reinforcement paddings on a necessary portion of the piston with welding. Consequently it is possible to reinforce the necessary portions after the manufacturing process of the piston. Hence the manufacturing process of the piston is not limited and the piston manufactured by means of gravity casting can be reinforced partially. Furthermore, the cost of the reinforcement can be reduced because the reinforcement is performed by welding the padding.

Although this invention is described with reference to two embodiments, this invention is not limited to these embodiments, and various changes and modifications can be effected without departing from the scope of the appended claims. For example, silicon carbide, alumina, silicon nitride or other ceramic fibres and their powders may be used as materials of reinforcement for this invention. Furthermore, such alloy that has a high temperature melting point, for example boron, titanium or the other alloys may be used for the material. Mother material for the filler metal may be selected from such metals or alloys that are excepted from a metal or alloy for manufacturing the piston itself. Furthermore, melt forging, hot pressure and sintering may be utilised for the manufacture of the compound, and alternatively manufactured by continuous casting. Moreover, the padding may be made by not only TIG welding, but also gas welding, MIG welding. The padding may be provided on other necessary portions, for example, as shown in Figure 7, the padding 21 may be located on the edge of upper portion of the circular hole 15 for prohibiting the cracking on the upper portion.

## Claims

1. A method for partially reinforcing a piston for an internal combustion engine, said method comprising;
   manufacturing the piston (10); and
   forming padding (21) on one or more portions of the piston by welding with a filler metal which contains a reinforcement material, characterized in that, while the filler metal melts during the welding and becomes connected to the piston, the melting temperature of the reinforcement material is higher than the welding temperature such that the reinforcement material is substantially unchanged during welding and remains embedded in the filler metal.

2. A method for partially reinforcing a piston as claimed in claim 1, in which said portion is received and said padding (21) is provided in a recess (20) in the piston.

3. A method for partially reinforcing a piston as claimed in claim 1 or claim 2, in which the padding (21) is thereafter machined.

4. A method for partially reinforcing a piston as claimed in any one of claims 1 to 3, in which the piston (10) is manufactured by means of ordinary or gravity casting.

5. A method for partially reinforcing a piston as claimed in any one of claims 1 to 4, in which a shaped mass of the reinforcement material is complexed with a mother metal of a filler by means of high pressure casting yielding a billet which is then extruded under heat by an extruder to obtain a linear filler metal.

6. A method for partially reinforcing a piston as claimed in claim 5, in which a ceramic fibre is used as a reinforcement material and is shaped by vacuum filter for forming a shaped mass.

7. A method for partially reinforcing a piston as claimed in claim 5, wherein powder of mother metal of a filler and ceramic fibre are mixed and extruded under pressure yielding a billet which is then extruded under heat by an extruder to obtain a linear filler metal.

8. A piston for an internal combustion engine formed by a method according to any one of claims 1 to 7, in which one or more portions of the piston (10) are reinforced in that the piston (10) is provided with padding (21) formed on said portion or portions (20) by welding with the filler metal to reinforce said portion or portions (20), said filler metal containing the reinforcement material, characterized in that, while the filler metal melts during the welding and becomes connected to the piston, since the melting temperature of the reinforcement material is higher than the welding temperature the reinforcement material is substantially unchanged during the welding and remains embedded in the filler metal.

9. A piston for an internal combustion engine as claimed in claim 8, in which the reinforcement comprises alumina fibre which is contained in the filler metal.

10. A piston for an internal combustion engine as claimed in claim 8, in which the reinforcement comprises silicon carbide or silicon nitride fibre which is contained in the filler metal.

11. A piston for an internal combusion engine as claimed in any one of claims 8, 9 and 10, in which the piston (10) is manufactured of aluminium alloy by means of ordinary casting or gravity casting.

12. A piston for an internal combustion engine as claimed in claim 11, in which the piston (10) has an under-cut portion (18, 19) for reducing material and lightening the piston (10).

13. A piston for an internal combustion engine as claimed in any one of claims 8 to 12, in which the padding (21) is provided in a recess located at said portion or portions.

14. A piston for an internal combustion engine as claimed in any one of claims 8 to 13, in which the reinforcement is provided with an annular groove (11) at its outer periphery for receiving a top piston ring.

15. A piston for an internal combustion engine as claimed in any one of claims 8 to 14, in which the portion (20) comprises a peripheral edge of a recess or a combustion chamber (26) formed on a top surface of the piston (10).

16. A piston for an internal combustion engine as claimed in any one of claims 8 to 15, in which the portion (20) comprises an edge of a circular hole (15) for receiving a piston pin.


**Patentansprüche**

1. Verfahren zum teilweisen Verstärken eines Kolbens für einen Verbrennungsmotor mit den folgenden Schritten:

Herstellen des Kolbens (10), und

Ausbilden einer Füllung (21) an einem oder mehreren Abschnitten des Kolbens durch Schweißen mit einem Füllmetall, welches ein Verstärkungsmaterial enthält, dadurch gekennzeichnet, daß, während das Füllmetall beim Schweißen schmilzt und sich mit dem Kolben verbindet, die Schmelztemperatur des Verstärkungsmaterials höher ist als die Schweißtemperatur derart, daß das Verstärkungsmaterial im wesentlichen während des Schweißens unverändert bleibt und in dem Füllmetall eingebettet bleibt.

2. Verfahren zum teilweisen Verstärken eines Kolbens nach Anspruch 1, wobei der Abschnitt in einer Aussparung (20) des Kolbens eingenommen und die Füllung (21) darin vorgesehen wird.

3. Verfahren zum teilweisen Verstärken eines Kolbens nach Anspruch 1 oder 2, bei welchem die Füllung (21) anschließend bearbeitet wird.

4. Verfahren zum teilweisen Verstärken eines Kolbens nach einem der Ansprüche 1 bis 3, bei welchem der Kolben (10) mit Hilfe von gewöhnlichem Gießen oder Schwerkraftguß hergestellt wird.

5. Verfahren zum teilweisen Verstärken eines Kolbens nach einem der Ansprüche 1 bis 4, bei welchem eine geformte Masse des Verstärkungsmaterials mit einem Matrixmetall eines Füllers mit Hilfe von Hochdruckguß zu einem Komplex verbunden wird, was einen Barren ergibt, der dann unter Erhitzung durch einen Extruder extrudiert wird, um ein lineares (langgestrecktes) Füllmaterial zu erhalten.

6. Verfahren zum teilweisen Verstärken eines Kolbens nach Anspruch 5, bei welchem eine Keramikfaser als Verstärkungsmaterial verwendet wird und durch einen Vakuumfilter zum Ausbilden einer geformten Masse geformt wird.

7. Verfahren zum teilweisen Verstärken eines Kolbens nach Anspruch 5, wobei ein Pulver aus Matrixmetall eines Füllers und keramische Fasern gemischt und unter Druck extrudiert werden, so daß man einen Barren erhält, welcher dann unter Erhitzung durch einen Extruder extrudiert wird, um ein lineares (langgestrecktes) Füllmaterial zu erhalten.

8. Kolben für einen Verbrennungsmotor, hergestellt durch ein Verfahren nach einem der Ansprüche 1 bis 7, bei welchem ein oder mehrere Abschnitte des Kolbens (10) verstärkt werden, indem der Kolben (10) mit einer Füllung (21) versehen wird, die an dem Abschnitt oder den Abschnitten (20) durch Schweißen des Füllermetalls gebildet werden, um den Abschnitt oder die Abschnitte (20) zu verstärken, wobei das Füllmetall das Verstärkungsmaterial enthält, dadurch gekennzeichnet, daß, während das Füllmetall beim Schweißen schmilzt und sich dann mit dem Kolben verbindet, das Verstärkungsmaterial, da seine Schmelztemperatur höher ist als die Schweißtemperatur, im wesentlichen während des Schweißens unverändert und in dem Füllmetall eingebettet bleibt.

9. Kolben für einen Verbrennungsmotor nach Anspruch 8, bei welchem die Verstärkung Tonerdefasern enthält, welche in dem Füllmetall enthalten sind.

10. Kolben für einen Verbrennungsmotor nach Anspruch 8, bei welchem das Verstärkungsmaterial Siliciumcarbid- oder Siliciumnitridfasern aufweist, welche in dem Füllmetall enthalten sind.

11. Kolben für einen Verbrennungsmotor nach einem der Ansprüche 8, 9 oder 10, bei welchem der Kolben (10) aus einer Aluminiumlegierung durch ein normales Gußverfahren oder durch Schwerkraftgießen hergestellt ist.

12. Kolben für einen Verbrennungsmotor nach Anspruch 11, bei welchem der Kolben (10) einen hinterschnittenen Abschnitt (18, 19) zur Reduzierung des Materials und zum Leichtermachen des Kolbens (10) hat.

13. Kolben für einen Verbrennungsmotor nach einem der Ansprüche 8 bis 12, bei welchem die Füllung (21) in einer Aussparung vorgesehen ist, die an dem Abschnitt oder den Abschnitten liegt.

14. Kolben für einen Verbrennungsmotor nach einem der Ansprüche 8 bis 13, bei welchem die Verstärkung mit einer ringförmigen Nut (11) an ihrem Außenumfang versehen ist, um einen oberen Kolbenring aufzunehmen.

15. Kolben für einen Verbrennungsmotor nach einem der Ansprüche 8 bis 14, bei welchem der Abschnitt (20) eine umlaufende Kante einer Aussparung oder einer Verbrennungskammer (26) aufweist, die an der oberen Fläche des Kolbens (10) ausgebildet ist.

16. Kolben für einen Verbrennungsmotor nach einem der Ansprüche 8 bis 15, bei welchem der Abschnitt (20) eine Kante eines kreisförmigen Loches (15) zum Aufnehmen einer Kolbenstange aufweist.

## Revendications

1. Procédé de renfort partiel d'un piston pour moteur à combustion interne, ledit procédé comprenant les étapes consistant à :

fabriquer le piston (10); et

former un revêtement (21) sur une ou plusieurs portions du piston par soudage avec un métal d'apport qui contient un matériau de renfort, caractérisé en ce que, tandis que le métal d'apport fond durant le soudage et se lie au piston, la température de fusion du matériau de renfort est plus élevée que la température de soudage de manière que le matériau de renfort demeure pratiquement inchangé durant le soudage et reste enrobé dans le métal d'apport.

2. Procédé de renfort partiel d'un piston selon la revendication 1, dans lequel ladite portion est reçue dans un évidement (20) dans le piston et ledit revêtement (21) est disposé dans cet évidement (20) dans le piston.

3. Procédé de renfort partiel d'un piston selon la revendication 1 ou 2, dans lequel le revêtement (21) est ensuite usiné.

4. Procédé de renfort partiel d'un piston selon l'une quelconque des revendications 1 à 3, dans lequel le piston (10) est fabriqué par coulage classique ou coulage debout.

5. Procédé de renfort partiel d'un piston selon l'une quelconque des revendications 1 à 4, dans lequel une masse façonnée du matériau de renfort est associée à un métal-mère d'un métal d'apport par coulage sous pression élevée, afin de produire une billette qui est ensuite extrudée à chaud par une extrudeuse afin d'obtenir un métal d'apport linéaire.

6. Procédé de renfort partiel d'un piston selon la revendication 5, dans lequel une fibre céramique est utilisée comme matériau de renfort et est façonnée par filtre à vide pour former une masse façonnée.

7. Procédé de renfort partiel d'un piston selon la revendication 5, dans lequel une poudre de métal-mère d'un métal d'apport et une fibre céramique sont mélangées et extrudées sous pression pour produire une billette qui est ensuite extrudée à chaud par une extrudeuse afin d'obtenir un métal d'apport linéaire.

8. Piston pour moteur à combustion interne formé par un procédé selon l'une quelconque des revendications 1 à 7, dans lequel une ou plusieurs portions du piston (10) sont renforcées en ce que le piston (10) est doté d'un revêtement (21) formé sur ladite ou lesdites portions (20) par soudage avec le métal d'apport pour renforcer ladite ou lesdites portions (20), ledit métal d'apport contenant le matériau de renfort, caractérisé en ce que, tandis que le métal d'apport fond durant le soudage et se lie au piston, puisque la température de fusion du matériau de renfort est plus élevée que la température de soudage, le matériau de renfort demeure pratiquement inchangé durant le soudage et reste enrobé dans le métal d'apport.

9. Piston pour moteur à combustion interne selon la revendication 8, dans lequel le renfort comprend une fibre d'alumine qui est contenue dans le métal d'apport.

10. Piston pour moteur à combustion interne selon la revendication 8, dans lequel le renfort comprend une fibre de carbure de silicium ou de nitrure de silicium qui est contenue dans le métal d'apport.

11. Piston pour moteur à combustion interne selon l'une quelconque des revendications 8, 9 et 10, dans lequel le piston (10) est fait d'alliage d'aluminium par coulage classique ou coulage debout.

12. Piston pour moteur à combustion interne selon la revendication 11, dans lequel le piston (10) comporte une portion sous découpée (18, 19) pour diminuer le matériau et alléger le piston (10).

13. Piston pour moteur à combustion interne selon l'une quelconque des revendications 8 à 12, dans lequel le revêtement (21) est disposé dans un évidement situé à ladite portion ou auxdites portions.

14. Piston pour moteur à combustion interne selon l'une quelconque des revendications 8 à 13, dans lequel le renfort est doté d'une gorge annulaire (11) à sa périphérie extérieure pour recevoir un segment de piston supérieur.

15. Piston pour moteur à combustion interne selon l'une quelconque des revendications 8 à 14, dans lequel la portion (20) comprend un bord périphérique d'un évidement ou d'une chambre de combustion (26) formé sur une surface supérieure du piston (10).

16. Piston pour moteur à combustion interne selon l'une quelconque des revendications 8 à 15, dans lequel la portion (20) comprend un bord d'un orifice circulaire (15) pour recevoir un axe de piston.

# FIG.1

10

20

21

11

12

13

18    18

16    16

15

19    14    14    15

17

# FIG.2

1

3

2

# FIG.3

Wear of Annular Groove

100μm

50μm

Comparison    Embodiment

# FIG.4

Wear of Piston Ring

100μm

50μm

Comparison    Embodiment

# FIG.5

20    21    26    10    12    13    15    15    19    14    14    17

# FIG.6

Number of Cracks

Comparison

Embodiment

Number of Repeated Heat Cycle (×1000 cycles)

# FIG.7

10

26

11

12

13

15

20

21

14

14

19

17

15

9